# EUROPEAN PATENT APPLICATION

(11) **EP 4 708 798 A1**
(43) Date of publication of application: **11.03.2026**
(21) Application number: 24824882.5
(22) Date of filing: 25.01.2024
(51) Int. Cl.: H04L 41/0803, H04W 4/02, H04W 24/02, H04W 24/10

(54) **NETWORK MANAGEMENT INTENT CONFIGURATION METHOD AND APPARATUS**

(30) Priority: 21.06.2023 CN 202310749089
(71) Applicant: Huawei Technologies Co., Ltd., Shenzhen, Guangdong 518129 (CN)
(72) Inventor: YU, Yijun, Shenzhen, Guangdong 518129 (CN); LI, Yexing, Shenzhen, Guangdong 518129 (CN); XU, Ruiyue, Shenzhen, Guangdong 518129 (CN); FAN, Mingyang, Shenzhen, Guangdong 518129 (CN); WANG, Le, Shenzhen, Guangdong 518129 (CN)
(74) Representative: Pfenning, Meinig & Partner mbB
(86) International application number: PCT/CN2024/073938
(87) International publication number: WO 2024/259978

(57) **Abstract**

This application provides a network management intent configuration method and an apparatus. The method includes: receiving an applied airspace associated with a network management intent; and configuring at least one managed entity of the network management intent based on the applied airspace, to enable a target of the network management intent to be fulfilled when the at least one managed entity provides a service for a terminal device in the applied airspace. In this way, the managed entity can centralize resources to provide the service for the terminal device in the applied airspace, so that network management intent configuration is more appropriate.

## Description

This application claims priority to Chinese Patent Application No. 202310749089.0, filed with the China National Intellectual Property Administration on June 21, 2023 and entitled "NETWORK MANAGEMENT INTENT CONFIGURATION METHOD AND APPARATUS", which is incorporated herein by reference in its entirety.

### TECHNICAL FIELD

This application relates to the field of communication technologies, and more specifically, to a network management intent configuration method and an apparatus.

### BACKGROUND

Currently, as application scenarios of network management intents are enriched, some network management intents may be applied to a specific airspace. For example, in an uncrewed aerial vehicle scenario, an uncrewed aerial vehicle may implement applications such as transportation and logistics, agricultural plant protection, security inspection, and geographical prediction in a specific airspace. How to configure a network management intent in this scenario becomes an urgent problem to be resolved.

### SUMMARY

This application provides a network management intent configuration method and an apparatus, so that network management intent configuration can be more appropriate.

According to a first aspect, a network management intent configuration method is provided. The method may be performed by a network management service producer entity or a chip in the network management service producer entity. The method includes: receiving an applied airspace associated with a network management intent; and configuring at least one managed entity of the network management intent based on the applied airspace, to enable a target of the network management intent to be fulfilled when the at least one managed entity provides a service for a terminal device in the applied airspace.

Based on this technical solution, a consumer entity can provide an applied airspace associated with a network management intent, so that when a producer entity configures a managed entity, the managed entity can centralize resources to provide a service for a terminal device in the applied airspace. This avoids a case in which a target of the network management intent is not fulfilled due to a problem of inappropriate configuration or excessive resources are used to fulfill the target, so that network management intent configuration is more appropriate.

With reference to the first aspect, in some implementations of the first aspect, the applied airspace is represented by using a longitude range, a latitude range, and a height range, or the applied airspace is represented through three-dimensional network coding, or the applied airspace is represented by using sphere center coordinates and a sphere radius, or the applied airspace is represented by using sector center coordinates, a vertical angle range, a horizontal angle range, and a sector side length.

Based on this technical solution, the consumer entity may express applied airspaces in various shapes in a plurality of manners, so that the producer entity can configure the managed entity to provide the service for the terminal device in the applied airspace.

With reference to the first aspect, in some implementations of the first aspect, the target of the network management intent includes at least one of the following: Communication bandwidth is within a bandwidth indicator range, a communication delay is within a delay indicator range, a quantity of communication users is within a user indicator range, network-aware speed measurement precision is within a speed measurement precision range, or network-aware positioning precision is within a positioning precision range, where the network-aware speed measurement precision is precision of measuring a speed of a moving object by using a network sensing function, and the network-aware positioning precision is precision of positioning the object by using the network sensing function.

Based on this technical solution, the producer entity can configure the managed entity based on the target of the network management intent, to provide different services for the terminal device in the applied airspace.

With reference to the first aspect, in some implementations of the first aspect, configuring the at least one managed entity of the network management intent based on the applied airspace, to enable the target of the network management intent to be fulfilled when the at least one managed entity provides the service for the terminal device in the applied airspace includes: configuring the at least one managed entity of the network management intent based on the applied airspace, to enable the target of the network management intent to be fulfilled when the at least one managed entity provides the service for the terminal device in the applied airspace in an applied time period, where the applied airspace includes information about the applied time period.

Based on this technical solution, the consumer entity may further provide an applied time period associated with an applied area, so that the producer entity can configure the managed entity based on the applied time period, and further, the network management intent configuration can be more appropriate.

With reference to the first aspect, in some implementations of the first aspect, the method further includes: receiving a non-applied airspace associated with the network management intent, where the at least one managed entity is capable of not providing a service for a terminal device in the non-applied airspace.

Based on this technical solution, the producer entity is capable of not providing the service for the terminal device in the non-applied airspace. For example, in an uncrewed aerial vehicle application scenario, the non-applied airspace may be an airspace in which an uncrewed aerial vehicle is forbidden to fly, so that the producer entity may not need to configure, in the non-applied airspace, a transmission resource used for uncrewed aerial vehicle communication, to improve resource utilization.

With reference to the first aspect, in some implementations of the first aspect, receiving the applied airspace associated with the network management intent includes: receiving a first request message, where the first request message is used to request to create the network management intent, and the first request message includes the network management intent and the applied airspace, or the first request message includes the network management intent, and the network management intent includes the applied airspace; receiving a second request message, where the second request message is used to request to modify the network management intent, and the second request message includes an identifier of the network management intent and the applied airspace; receiving a third request message, where the third request message is used to request to activate the network management intent, and the third request message includes an identifier of the network management intent and the applied airspace; or receiving a fourth request message, where the fourth request message is used to request to suspend the network management intent, and the fourth request message includes an identifier of the network management intent and the applied airspace.

With reference to the first aspect, in some implementations of the first aspect, configuring the at least one managed entity of the network management intent based on the applied airspace, to enable the target of the network management intent to be fulfilled when the at least one managed entity provides the service for the terminal device in the applied airspace includes: obtaining information about a plurality of managed entities of the network management intent; determining the at least one managed entity in the plurality of managed entities based on the applied airspace and the information about the plurality of managed entities; and configuring the at least one managed entity, to enable the target of the network management intent to be fulfilled when the at least one managed entity provides the service for the terminal device in the applied airspace.

Based on this technical solution, the producer entity can select an appropriate managed entity based on the applied airspace to provide the service for the terminal device in the applied airspace, so that further, the network management intent configuration is more appropriate.

With reference to the first aspect, in some implementations of the first aspect, the information about the managed entities includes at least one of the following: location information, frequency information, beam direction information, or beam width information.

Based on this technical solution, the producer entity can select, based on an attribute or a capability of the managed entities, an appropriate managed entity to provide the service for the terminal device in the applied airspace, so that further, the network management intent configuration is more appropriate.

With reference to the first aspect, in some implementations of the first aspect, the service includes either a communication service or a sensing service.

With reference to the first aspect, in some implementations of the first aspect, before receiving the applied airspace associated with the network management intent, the method further includes: receiving the target of the network management intent; determining a recommended applied airspace based on the target of the network management intent; and sending the recommended applied airspace, where the recommended applied airspace is used to determine the applied airspace.

Based on this technical solution, the consumer entity can determine the applied airspace based on the recommended applied airspace fed back by the producer entity, so that the applied airspace can be more appropriately determined and further, the network management intent configuration is more appropriate.

With reference to the first aspect, in some implementations of the first aspect, the method further includes: sending intent report information, where the intent report information indicates whether the target of the network management intent is fulfilled when the at least one managed entity provides the service for the terminal device in the applied airspace.

With reference to the first aspect, in some implementations of the first aspect, configuring the at least one managed entity of the network management intent based on the applied airspace, to enable the target of the network management intent to be fulfilled when the at least one managed entity provides the service for the terminal device in the applied airspace includes: obtaining information about the at least one managed entity; determining, based on the applied airspace and the information about the at least one managed entity, a management action group for each managed entity to fulfill the target of the network management intent; and configuring the at least one managed entity, to enable the target of the network management intent to be fulfilled when the at least one managed entity provides the service for the terminal device in the applied airspace.

Based on this technical solution, the consumer entity can learn of an execution status of the network management intent in time, and can better manage the network management intent.

According to a second aspect, a network management intent configuration method is provided. The method may be performed by a network management service consumer entity or a chip in the network management service consumer entity. The method includes: determining an applied airspace associated with a network management intent, where the applied airspace is used to configure at least one managed entity of the network management intent, to enable a target of the network management intent to be fulfilled when the at least one managed entity provides a service for a terminal device in the applied airspace; and sending the applied airspace.

For beneficial technical effects of implementations of the second aspect, refer to descriptions of related implementations of the first aspect. Details are not described again.

With reference to the second aspect, in some implementations of the second aspect, the applied airspace is represented by using a longitude range, a latitude range, and a height range, or the applied airspace is represented through three-dimensional network coding, or the applied airspace is represented by using sphere center coordinates and a sphere radius, or the applied airspace is represented by using sector center coordinates, a vertical angle range, a horizontal angle range, and a sector side length.

With reference to the second aspect, in some implementations of the second aspect, the target of the network management intent includes at least one of the following: Communication bandwidth is within a bandwidth indicator range, a communication delay is within a delay indicator range, a quantity of communication users is within a user indicator range, network-aware speed measurement precision is within a speed measurement precision range, or network-aware positioning precision is within a positioning precision range, where the network-aware speed measurement precision is precision of measuring a speed of a moving object by using a network sensing function, and the network-aware positioning precision is precision of positioning the object by using the network sensing function.

With reference to the second aspect, in some implementations of the second aspect, the applied airspace includes information indicating an applied time period associated with the applied airspace, and the applied time period is used to configure at least one managed entity of the network management intent, to enable the target of the network management intent to be fulfilled when the at least one managed entity provides the service for the terminal device in the applied airspace in the applied time period.

With reference to the second aspect, in some implementations of the second aspect, the method further includes: sending a non-applied airspace associated with the network management intent, where the at least one managed entity is capable of not providing a service for a terminal device in the non-applied airspace.

With reference to the second aspect, in some implementations of the second aspect, sending the applied airspace includes: sending a first request message, where the first request message is used to request to create the network management intent, and the first request message includes the network management intent and the applied airspace, or the first request message includes the network management intent, and the network management intent includes the applied airspace; sending a second request message, where the second request message is used to request to modify the network management intent, and the second request message includes an identifier of the network management intent and the applied airspace; sending a third request message, where the third request message is used to request to activate the network management intent, and the third request message includes an identifier of the network management intent and the applied airspace; or sending a fourth request message, where the fourth request message is used to request to suspend the network management intent, and the fourth request message includes an identifier of the network management intent and the applied airspace.

With reference to the second aspect, in some implementations of the second aspect, determining the applied airspace includes: sending a predicted applied airspace associated with the network management intent; receiving a recommended airspace, where the recommended airspace includes at least one of a recommended applied airspace and a recommended non-applied airspace, and the recommended airspace is determined based on the predicted applied airspace; and determining the applied airspace based on the recommended airspace.

With reference to the second aspect, in some implementations of the second aspect, the method includes: receiving intent report information, where the intent report information indicates whether the target of the network management intent is fulfilled when the at least one managed entity is in the applied airspace.

With reference to the second aspect, in some implementations of the second aspect, the method includes: sending the target of the network management intent; and receiving the recommended applied airspace, where the recommended applied airspace is determined based on the target of the network management intent, and the recommended applied airspace is used to determine the applied airspace.

With reference to the second aspect, in some implementations of the second aspect, the service includes either a communication service or a sensing service.

With reference to the second aspect, in some implementations of the second aspect, the method includes: receiving the intent report information, where the intent report information indicates whether the target of the network management intent is fulfilled when the at least one managed entity provides the service for the terminal device in the applied airspace.

According to a third aspect, a network management intent configuration method is provided. The method includes: determining an applied airspace associated with a network management intent; sending the applied airspace, and receiving the applied airspace; and configuring at least one managed entity of the network management intent based on the applied airspace, to enable a target of the network management intent to be fulfilled when the at least one managed entity provides a service for a terminal device in the applied airspace.

For beneficial technical effects of implementations of the third aspect, refer to descriptions of related implementations of the first aspect. Details are not described again.

With reference to the third aspect, in some implementations of the third aspect, the applied airspace is represented by using a longitude range, a latitude range, and a height range, or the applied airspace is represented through three-dimensional network coding, or the applied airspace is represented by using sphere center coordinates and a sphere radius, or the applied airspace is represented by using sector center coordinates, a vertical angle range, a horizontal angle range, and a sector side length.

With reference to the third aspect, in some implementations of the third aspect, the target of the network management intent includes at least one of the following: Communication bandwidth is within a bandwidth indicator range, a communication delay is within a delay indicator range, a quantity of communication users is within a user indicator range, network-aware speed measurement precision is within a speed measurement precision range, or network-aware positioning precision is within a positioning precision range, where the network-aware speed measurement precision is precision of measuring a speed of a moving object by using a network sensing function, and the network-aware positioning precision is precision of positioning the object by using the network sensing function.

With reference to the third aspect, in some implementations of the third aspect, configuring the at least one managed entity of the network management intent based on the applied airspace, to enable the target of the network management intent to be fulfilled when the at least one managed entity provides the service for the terminal device in the applied airspace includes: configuring the at least one managed entity of the network management intent based on the applied airspace, to enable the target of the network management intent to be fulfilled when the at least one managed entity provides the service for the terminal device in the applied airspace in an applied time period, where the applied airspace includes information about the applied time period.

With reference to the third aspect, in some implementations of the third aspect, the method further includes: sending a non-applied airspace associated with the network management intent, and receiving the non-applied airspace associated with the network management intent, where the at least one managed entity is capable of not providing a service for a terminal device in the non-applied airspace.

With reference to the third aspect, in some implementations of the third aspect, sending the applied airspace and receiving the applied airspace include: sending a first request message and receiving the first request message, where the first request message is used to request to create the network management intent, and the first request message includes the network management intent and the applied airspace; or the first request message includes the network management intent, and the network management intent includes the applied airspace; sending a second request message, and receiving the second request message, where the second request message is used to request to modify the network management intent, and the second request message includes an identifier of the network management intent and the applied airspace; or sending a third request message, and receiving the third request message, where the third request message is used to request to activate the network management intent, and the third request message includes an identifier of the network management intent and the applied airspace; or sending a fourth request message, and receiving the fourth request message, where the fourth request message is used to request to suspend the network management intent, and the fourth request message includes an identifier of the network management intent and the applied airspace.

With reference to the third aspect, in some implementations of the third aspect, configuring the at least one managed entity of the network management intent based on the applied airspace, to enable the target of the network management intent to be fulfilled when the at least one managed entity provides the service for the terminal device in the applied airspace includes: obtaining information about a plurality of managed entities of the network management intent; determining the at least one managed entity in the plurality of managed entities based on the applied airspace and the information about the plurality of managed entities; and configuring the at least one managed entity, to enable the target of the network management intent to be fulfilled when the at least one managed entity provides the service for the terminal device in the applied airspace.

With reference to the third aspect, in some implementations of the third aspect, the information about the managed entities includes at least one of the following: location information, frequency information, beam direction information, or beam width information.

With reference to the third aspect, in some implementations of the third aspect, the service includes either a communication service or a sensing service.

With reference to the third aspect, in some implementations of the third aspect, before sending the applied airspace and receiving the applied airspace, the method further includes: sending the target of the network management intent, and receiving the target of the network management intent; determining a recommended applied airspace based on the target of the network management intent; and receiving the recommended applied airspace, and sending the recommended applied airspace, where the recommended applied airspace is used to determine the applied airspace.

With reference to the third aspect, in some implementations of the third aspect, the method further includes: sending intent report information, and receiving the intent report information, where the intent report information indicates whether the target of the network management intent is fulfilled when the at least one managed entity provides the service for the terminal device in the applied airspace.

With reference to the third aspect, in some implementations of the third aspect, configuring the at least one managed entity of the network management intent based on the applied airspace, to enable the target of the network management intent to be fulfilled when the at least one managed entity provides the service for the terminal device in the applied airspace includes: obtaining information about the at least one managed entity; determining, based on the applied airspace and the information about the at least one managed entity, a management action group for each managed entity to fulfill the target of the network management intent; and configuring the at least one managed entity, to enable the target of the network management intent to be fulfilled when the at least one managed entity provides the service for the terminal device in the applied airspace.

According to a fourth aspect, a network management intent configuration apparatus is provided. The apparatus includes a transceiver unit and a processing unit. The transceiver unit is configured to receive an applied airspace associated with a network management intent. The processing unit is configured to configure at least one managed entity of the network management intent based on the applied airspace, to enable a target of the network management intent to be fulfilled when the at least one managed entity provides a service for a terminal device in the applied airspace.

For implementations of the fourth aspect and beneficial technical effects of the implementations, refer to descriptions of related implementations of the first aspect. Details are not described again.

According to a fifth aspect, a network management intent configuration apparatus is provided. The apparatus includes a transceiver unit and a processing unit. The processing unit determines an applied airspace associated with a network management intent, where the applied airspace is used to configure at least one managed entity of the network management intent, to enable a target of the network management intent to be fulfilled when the at least one managed entity provides a service for a terminal device in the applied airspace. The transceiver unit is configured to send the applied airspace.

For implementations of the fifth aspect and beneficial technical effects of the implementations, refer to descriptions of related implementations of the first aspect and the second aspect. Details are not described again.

According to a sixth aspect, a communication apparatus is provided. The communication apparatus has a function of implementing any one of the first aspect or the possible implementations of the first aspect, any one of the second aspect or the possible implementations of the second aspect, or any one of the third aspect or the possible implementations of the third aspect. The function may be implemented by hardware, or may be implemented by hardware executing corresponding software. The hardware or the software includes one or more units corresponding to the function.

According to a seventh aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method according to any one of the first aspect or the possible implementations of the first aspect.

For example, the communication apparatus is a network management service producer network element.

According to an eighth aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method according to any one of the second aspect or the possible implementations of the second aspect.

For example, the communication apparatus is a network management service consumer network element.

According to a ninth aspect, a communication apparatus is provided, and includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to enable the method according to any one of the first aspect or the possible implementations of the first aspect to be performed. The communication apparatus may be a chip used in a network management service producer network element.

According to a tenth aspect, a communication apparatus is provided, and includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to enable the method according to any one of the second aspect or the possible implementations of the second aspect to be performed. The communication apparatus may be a chip used in a network management service consumer network element.

According to an eleventh aspect, a computer-readable storage medium is provided. The computer-readable storage medium stores computer instructions, and when the computer instructions are run on a computer, the method according to any one of the first aspect or the possible implementations of the first aspect is performed.

According to a twelfth aspect, a computer-readable storage medium is provided. The computer-readable storage medium stores computer instructions, and when the computer instructions are run on a computer, the method according to any one of the second aspect or the possible implementations of the second aspect is performed.

According to a thirteenth aspect, a computer program product is provided. The computer program product includes computer program code, and when the computer program code is run on a computer, the method according to any one of the first aspect or the possible implementations of the first aspect is performed.

According to a fourteenth aspect, a computer program product is provided. The computer program product includes computer program code, and when the computer program code is run on a computer, the method according to any one of the second aspect or the possible implementations of the second aspect is performed.

According to a fifteenth aspect, a wireless communication system is provided, and includes the communication apparatus according to the fourth aspect and/or the communication apparatus according to the fifth aspect.

According to a sixteenth aspect, a wireless communication system is provided, and includes the communication apparatus according to any one or more of the fourth aspect to the fifteenth aspect, or the communication apparatus according to any possible implementation of any one of the aspects.

### BRIEF DESCRIPTION OF DRAWINGS

FIG. 1 is a diagram of a data structure of a network management intent;
FIG. 2 is a diagram of an architecture of a communication system to which an embodiment of this application is applicable;
FIG. 3 is a schematic flowchart of a network management intent configuration method according to an embodiment of this application;
FIG. 4 is a diagram of a possible applied airspace;
FIG. 5 is a schematic flowchart of a possible method for determining an applied area according to an embodiment of this application;
FIG. 6 is a schematic flowchart of a possible network management intent configuration method according to an embodiment of this application; and
FIG. 7 to FIG. 9 are diagrams of possible communication apparatuses according to embodiments of this application.

### DESCRIPTION OF EMBODIMENTS

The following describes technical solutions of this application with reference to accompanying drawings.

The technical solutions of this application may be applied to various network functions virtualization (network functions virtualization, NFV) systems. In the systems, current service technical solutions, network construction schemes, and network operation and maintenance methods of an operator may be described as modes and policies in a standard formal language, and the technical solutions and the construction schemes are implemented based on the modes and the policies. For example, the technical solutions in this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, or an open network automation platform (open network automation platform, ONAP) system.

For clarity, the following explains some terms in embodiments of this application.

### 1. Network management, network management service, network management service producer entity, and network management service consumer entity

### 1.1 Network management

The network management refers to management of a network resource, including but not limited to monitoring, controlling, and recording performance and usage of the network resource, and delivering a management action group to the network resource (for example, a device in a network) based on a detected network status, to enable the network to run effectively. For example, the network management may be monitoring, testing, configuring, analyzing, evaluating, and controlling the network resource. The network management may alternatively be that when a fault occurs in the network, the fault can be reported and processed in time, a network system can be coordinated and maintained to run efficiently, and so on. The network resource is an object to which the network management is applied, and may also be referred to as a network object or a managed entity. For example, the network resource may be a base station device, a router, a switch, or a core network device. This is not particularly limited in embodiments of this application. For ease of description, the managed entity is used as an example for description in embodiments of this application, but may be replaced with another object to which the network management is applied.

### 1.2 Network management service

The network management service refers to a service that provides a network management function. A producer entity of the service usually provides the network management function for a consumer entity of the service through a network interface (for example, a service based interface).

### 1.3 Network management service producer entity

An entity that provides the network management service is referred to as the network management service producer entity. For example, a capability or a function of the network management service producer entity may be deployed on a network element, and the network element is referred to as a network management service producer network element. Alternatively, a capability or a function of the network management service producer entity may be deployed on another device. This is not limited in embodiments of this application. For ease of description, the network management service producer entity is used as an example for description in embodiments of this application, but may be replaced with another device on which the capability or the function of the network management service producer entity is deployed.

### 1.4 Network management service consumer entity

An entity that invokes the network management is referred to as the network management service consumer entity. For example, a capability or a function of the network management service consumer entity may be deployed on a network element, and the network element is referred to as a network management service consumer network element. Alternatively, a capability or a function of the network management service consumer entity may be deployed on another device. This is not limited in embodiments of this application. For ease of description, the network management service consumer entity is used as an example for description in embodiments of this application, but may be replaced with another device on which the capability or the function of the network management service consumer entity is deployed.

### 2. Network management intent (intent for short)

The network management intent refers to a requirement of the network management service consumer entity for the network management service, and may also be referred to as a network management service requirement. This name is not limited in embodiments of this application. For example, the network management intent may be an intent like an optical private line service intent or an energy saving intent, for example, an intent (intent) defined in the 3rd generation partnership project (3rd generation partnership project, 3GPP) standard specification 28.312.

In an intent-based interaction scenario of this application, two roles are mainly included: a network management provision entity and the network management service consumer entity. The network management provision entity may also be referred to as a network management provider, an intent provider (intent provider), an intent handler (intent handler), or the like. The network management service consumer entity may also be referred to as a network management service consumer, an intent consumer (intent consumer), an intent owner (intent owner), or the like.

The network management service consumer entity may be an invoker of the network management service, and may perform operations such as creating, modifying, deleting, and querying for a network management intent expression. The network management service consumer entity may be configured in a network management system (network management system, NMS), an element management system (element management system, EMS), or a network device (network equipment, NE), and may be a management function, a management function entity, a management entity, a network device, a network element, or the like. This is not limited in this application.

The intent may be applied to the network system, to fulfill an expected target of a specified performance indicator of the network device in a specific range. The intent may express an expectation for the network system by using a formal specification and description information. The formal specification may refer to intent-specific syntax or semantics, and the description information may be used to describe a requirement, a target, and a constraint of the intent.

The intent may include at least one intent expectation. Each intent expectation may represent a performance requirement of the network management service consumer entity for a specific network object. One intent expectation may include at least one expected target and an expected object, and each expected target may represent a performance requirement of the network management service consumer entity for a specific attribute of the expected object. For example, the intent expectation may include two expected targets. One expected target is that an average downlink throughput is greater than 5 Mbps, and the other expected target is that an end-to-end delay is less than 10 milliseconds. If the average downlink throughput of the expected object is greater than 5 Mbps, the expected target for the downlink throughput is met. If the end-to-end delay of the expected object is less than 10 milliseconds, the expected target for the delay is met. If the two expected targets of the intent expectation are met, the intent expectation is fulfilled.

The intent may further include an intent context. The intent context may represent a constraint or a condition of the network management service consumer entity for the intent. For example, the network management service consumer entity may restrict applied duration of the intent by using the intent context.

The intent may further include an expected context. The expected context may represent a constraint or a condition of the network management service consumer entity for an intent expectation. For example, the network management service consumer entity may restrict applied duration of the intent expectation by using the expected context.

The intent may further include a target context. The target context may represent a constraint or a condition of the network management service consumer entity for an expected target. For example, the network management service consumer entity may restrict applied duration of the expected target by using the target context.

The intent may further include an object context. The object context may represent a constraint or a condition of the network management service consumer entity for a network object to which the intent is applied. For example, the network management service consumer entity may indicate, by using the object context, an area in which the network object to which the intent is applied is located.

The intent expectation, the expected target, and the intent context described above may be used as information elements in an information object class (information object class, IOC) in an intent creation request. The network management service consumer entity may send the information elements to the network management service producer entity, to express a requirement for the network management service.

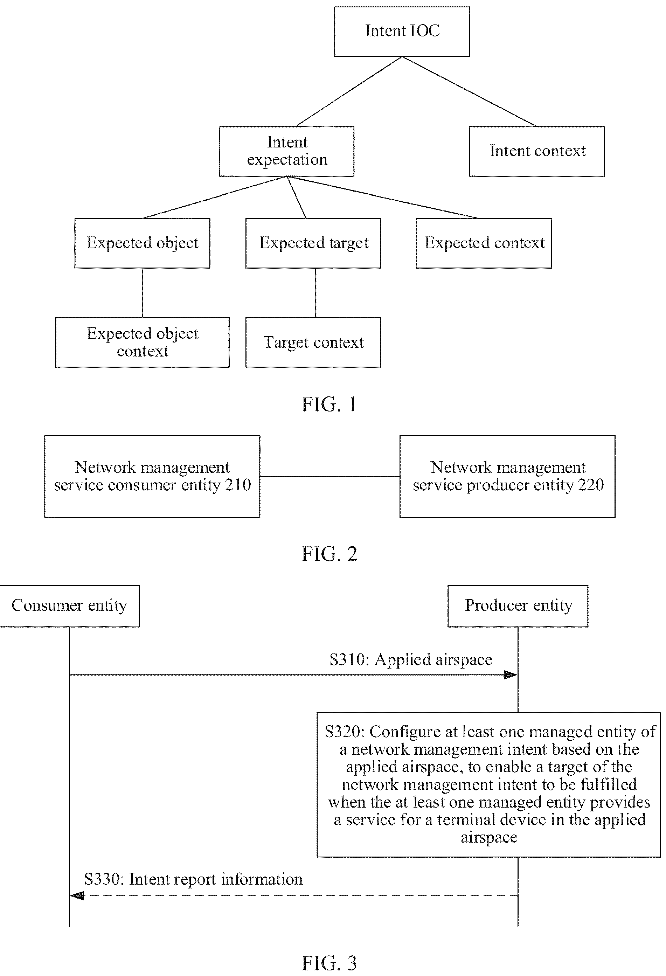

The information element in the intent IOC may express the requirement for the network management service by using a specific structure. For example, FIG. 1 is a diagram of a structure of an intent IOC.

Refer to FIG. 1. The intent IOC includes an intent expectation and an intent context. The intent expectation includes an expected object, an expected target, and an expected context. The expected object includes an expected object context, and the expected target includes a target context. It may be understood that an information element (for example, the intent IOC, the intent expectation, the expected object, or the expected target) of a non-context type may include an information element (for example, the intent context, the expected object context, the target context, or the expected context) of a context type, and the information element of the context type can be used to restrict the information element of the non-context type.

It may be understood that FIG. 1 schematically describes a relationship between attributes in the intent IOC. Based on a network management service requirement, the intent IOC may further include another attribute. This is not particularly limited in this application. It may be further understood that a quantity of attributes of a same type is not particularly limited in this application. For example, one intent IOC may include one or more parallel intent expectation attributes, and one intent expectation may also include one or more parallel expected target attributes.

### 3. Network management intent template

The network management intent template refers to sample description information of the network management intent, and may also be referred to as a network management service requirement template. This name is not limited in embodiments of this application. The intent template may be used to specify syntax and semantics of various attribute expressions described above. For example, the intent template may specify a field type and a value type that may be used for each attribute in the IOC. For example, the intent template may include intent expectation description information used to specify how the intent expectation is expressed. The intent expectation description information may specify a type of an expected target attribute, for example, a delay, bandwidth, or a maximum quantity of users, that may be included in the intent expectation. The intent expectation description information may further specify a field type of each expected target. For example, a field type of an expected target about the delay is a character string, a field type of an expected target about the bandwidth is a character string, and a field type of an expected target about the maximum quantity of users is an integer. For another example, the intent template may further include intent context description information for specifying how the intent context and the expected context are expressed. The intent context description information may be used to specify a field type of the intent context, and the like. This is not particularly limited in this application.

### 4. Intent expression

In embodiments of this application, the intent expression is an informational expression for expressing a network management service intent, and may be an instantiation result of the network management intent template. A consumer of the network management intent can instantiate the intent IOC based on the intent template to generate the intent expression. The intent expression generated through instantiation can be used for a specific network service. For example, the intent expression may be represented by a list of a group of attributes and key-value pairs (for example, a group of [attribute, value]) of the network management service intent.

For example, the intent expression includes a performance indicator information instance, a network object information instance, and a context information instance.

For example, the performance indicator information instance may include a value or a value range of a target indicator requirement corresponding to performance indicator information. For example, a target indicator requirement corresponding to a performance indicator information template includes a bandwidth parameter, and the performance indicator information instance includes that a value of the bandwidth parameter is 20 M, or a value range of the bandwidth parameter is 10 M to 15 M. For example, the target indicator requirement corresponding to the performance indicator information template includes a delay parameter, and a delay parameter instance includes that a value of the delay parameter is 2s, or a value range of the delay parameter is 1s to 5s.

A target network object indicated by the network object information instance is an instantiation result of a target network object indicated by a network object information template. For example, the target network object indicated by the network object information instance is one of target network objects indicated by the network object information template, in other words, indicates one of a physical entity or a logical entity that implements the network management service. In this case, the network object information instance indicates a specific network object. For example, the network object information template indicates a network service, and the network object information instance indicates an energy saving service.

The context information instance indicates a constraint condition of the network management intent expression. For example, the context information instance includes a constraint parameter of a network management intent expression. For example, the context information instance may include information about a source end and a sink end that correspond to the target network object indicated by the network object instance.

An intent expectation information instance includes the performance indicator information instance and the network object information instance.

In embodiments of this application, an "intent" transmitted by using a message is an intent expression.

### 5. Intent instance

The network management intent instance refers to a network management intent processing process locally created by a network management service provision entity based on the received network management intent expression (for example, the performance indicator information instance, the network object information instance, or the context information instance).

The network management intent processing process is used to process the network management intent expression. For example, the network management intent processing process may include an identifier, and the identifier identifies the process. The network management intent processing process may include a computing resource, and the computing resource is used to perform operations such as network management intent translation and database (for example, semantic knowledge base) query. The network management intent processing process may include a storage resource, and the storage resource is used to store the network management intent expression, a result of the network management intent translation, and the like.

The network management intent translation is performed to convert the network management intent expression into a corresponding management action group. The management action group may be instructions that are applied to the physical entity or the logical entity, for example, adjusting an antenna tilt angle of a base station or turning on an energy saving switch of a cell.

### 6. Network management action group (actions)

The network management action group is one or more network management actions generated by the network management service producer entity based on the intent expression. The network management service producer entity performs the one or more network management actions to meet an intent of the network management service consumer entity. The network management action group may also be referred to as a management operation or an intent operation. The network management action group may be an operation instruction set for the expected object (for example, a physical entity or a logical entity to which the intent is applied and that is in the network system), and includes one or more instructions, for example, adjusting an antenna tilt angle of a base station or turning on an energy saving switch of a cell.

The network management service producer entity may generate a plurality of management action groups based on the intent expression. In an execution process, the network management service producer entity may select some management action groups from the plurality of management action groups at one time for execution. In other words, the management action group generated by the network management service producer entity based on the intent expression translation is an optional operation that can be performed to meet the intent. The network management service producer entity may select one of the network management action groups for execution to meet the intent, or may select a network management action group for a plurality of times for execution to meet the intent.

The foregoing describes related terms in embodiments of this application. The following describes, with reference to FIG. 1, an application scenario to which embodiments of this application are applicable.

FIG. 2 is a diagram of a structure of a communication system to which an embodiment of this application is applicable. An apparatus that may be in the communication system is first described.
1. A network management service consumer entity 210 may be configured to: invoke a management service, or invoke an intent service to manage a network system. For example, the network management service consumer entity 210 may instantiate an intent template, set an intent IOC to generate an intent expression, and send the intent expression to a network management service producer entity 220, to achieve an expectation for the network system.

The network management service consumer entity 210 may also be referred to as a network management service consumer network element, a network management service consumer, an intent management service consumer (intent management service consumer), an intent consumer (intent consumer), an intent owner (intent owner), or the like. In a future communication system, the network management service consumer entity may also have another name. This is not particularly limited in this application.

2. The network management service producer entity 220 may be configured to provide the management service. For example, the network management service producer entity 220 may receive the intent expression from the network management service consumer entity 210, and perform, based on the intent expression, procedures of intent translation, intent management, and intent execution and maintenance.

The network management service producer entity 220 may also be referred to as a network management service producer network element, an intent management service provider (intent management service provider), a network management service producer, an intent provider (intent provider), an intent handler (intent handler), or the like. In the future communication system, the network management service producer entity may also have another name. This is not particularly limited in this application.

The entities may be network elements in a hardware device, or may be software functions running on dedicated hardware, or may be virtualization functions instantiated on a platform (for example, a cloud platform). It may be understood that the entities may be implemented by one device, or may be implemented by a plurality of devices together. In addition, the entities may alternatively be functional modules in a system, for example, functional modules in a network management system (network management system, NMS), an equipment management system (equipment management system, EMS), or a device, for example, one or more functional modules in a network device (network equipment, NE). The network device may be a base station or a core network element.

For example, the network management service consumer entity 210 may be deployed in the NMS, the network management service producer entity 220 may be deployed in different EMSs, and information exchange between the network management service consumer entity 210 and the network management service producer entity 220 may be performed through an interface between the NMS and the EMS.

For another example, the network management service consumer entity 210 may be deployed in the EMS, the network management service producer entity 220 may be deployed in different NEs, and information exchange between the network management service consumer entity 210 and the network management service producer entity 220 may be performed through an interface between the NMS and the EMS.

The solutions of this application may be further applied to another system including a corresponding entity. This is not limited in this application, and is not specifically limited in this embodiment of this application.

As application scenarios of network management intents are enriched, some network management intents may be applied to a specific airspace. For example, in an uncrewed aerial vehicle scenario, an uncrewed aerial vehicle may implement applications such as transportation and logistics, agricultural plant protection, security inspection, and geographical prediction in a specific airspace. Performance of a network management intent in this scenario is closely related to an airspace to which the network management intent is applied. How to provide a service of the network management intent in this scenario becomes an urgent problem to be resolved.

This application provides a network management intent configuration method and an apparatus, so that network management intent configuration is more appropriate in an airspace-related scenario. The following first describes, with reference to FIG. 3, a network management intent configuration method provided in an embodiment of this application.

FIG. 3 is a schematic flowchart of the network management intent configuration method according to the embodiment of this application. For ease of description, a network management service producer entity is referred to as a producer entity for short, a network management service consumer entity is referred to as a consumer entity for short, and the network management intent is referred to as an intent for short.

S310: The consumer entity sends an applied airspace of a network management intent to the producer entity. Correspondingly, the producer entity receives the applied airspace associated with the network management intent from the consumer entity.

The applied airspace may be used to configure at least one managed entity of the network management intent, to enable a target of the network management intent to be fulfilled when the at least one managed entity provides a service for a terminal device in the applied airspace. In other words, the consumer entity can provide the applied airspace associated with the network management intent, so that when the producer entity configures the managed entity, the managed entity can centralize resources to provide the service for the terminal device in the applied airspace. This avoids a case in which the target of the network management intent is not fulfilled due to a problem of inappropriate configuration or excessive resources are used to fulfill the target, so that network management intent configuration is more appropriate.

Fulfilling (fulfilling) the target of the network management intent may also be described as meeting the target of the network management intent, achieving the target of the network management intent, or the like.

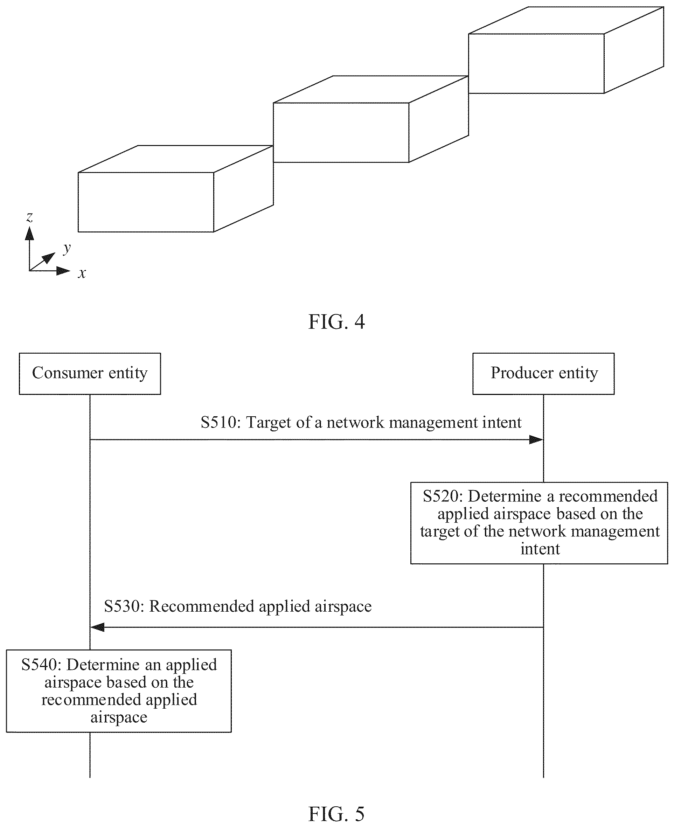

It may be understood that the applied airspace may be a three-dimensional space in which the consumer entity invokes a service, and a range of the three-dimensional space may be configured based on a specific application scenario. This is not particularly limited in this application. For example, the applied airspace may include one or more three-dimensional integral spaces in shapes such as a cube or a sphere. For ease of understanding of this embodiment of this application, FIG. 4 is a diagram of a possible applied airspace.

For example, in FIG. 4, the applied airspace includes three cubic three-dimensional spaces. A plane formed by an x-axis and a y-axis in FIG. 4 may represent a ground plane, and a z-axis represents a direction perpendicular to the ground plane. The three three-dimensional spaces may be respectively: an airspace from 50 meters to 100 meters above an area #1, an airspace from 80 meters to 130 meters above an area #2, and an airspace from 120 meters to 170 meters above an area #3. The area #1, the area #2, and the area #3 are three specific two-dimensional areas on the ground. Therefore, the producer entity may configure the managed entity, to enable the target of the network management intent to be fulfilled in the applied airspace. For example, in an uncrewed aerial vehicle management scenario, the network management intent is a communication service assurance intent, and the applied airspace represents a flight range of an uncrewed aerial vehicle. The producer entity may configure a managed entity (for example, a base station), so that the managed entity provides a transmission resource used for communication for the uncrewed aerial vehicle in the applied airspace.

The applied airspace may be expressed in various manners that can be used to describe a three-dimensional space. For example, the applied airspace can be represented by using a longitude range, a latitude range, and a height range. For example, the consumer entity may describe a range of the applied area projected to the ground by using a group of longitude ranges and latitude ranges (for example, a longitude range is 120 degrees 53 minutes east longitude to 120 degrees 55 minutes east longitude, and a latitude range is 30 degrees 41 minutes to 43 minutes north latitude), and then describe a height of the applied airspace by using a group of height ranges (for example, a height range is 50 meters to 100 meters away from the ground). For another example, the applied airspace can be represented through three-dimensional network coding, for example, a geographic coordinate subdividing grid with one dimension integral coding on 2n-tree (geographic coordinate subdividing grid with one dimension integral coding on 2n-tree, GeoSOT). For still another example, the applied airspace is represented by using sphere center coordinates and a sphere radius. For example, the sphere center coordinates may be located by using a longitude, a latitude, and a height, and then a sphere area is limited by using the sphere radius. For still another example, the applied airspace is represented by using sector center coordinates, a vertical angle range, a horizontal angle range, and a sector side length. For example, the sector center coordinates are located by using a longitude, a latitude, and a height, and then a sector area is limited by using the vertical angle range, the horizontal angle range, and the sector side length. An expression manner of the three-dimensional space is not particularly limited in this application. The expression manner that is of the three-dimensional space and that is used by the consumer entity may be related to a shape of the applied space or an interpretation capability of the consumer entity and the producer entity. This is not particularly limited in this application.

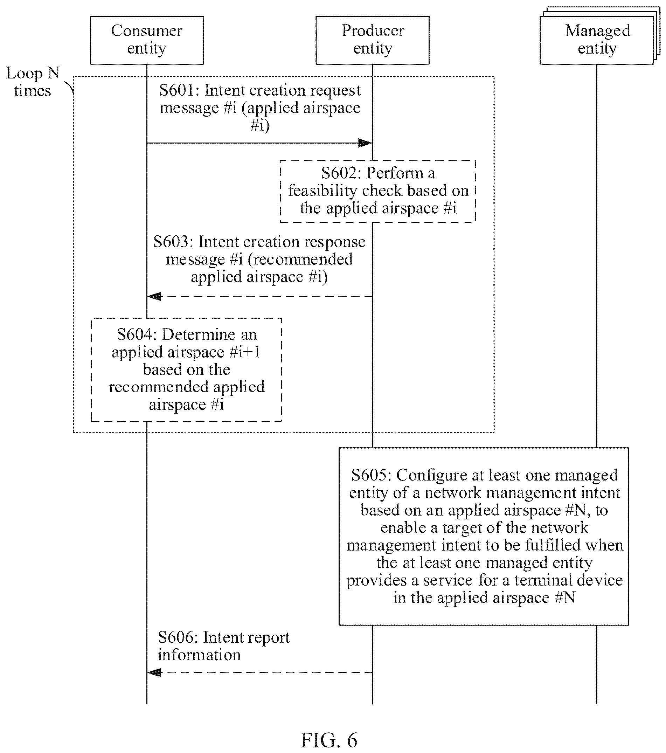

The applied airspace may be determined by the consumer entity based on a scenario, or may be determined by the consumer entity and the producer entity through negotiation. When the consumer entity and the producer entity determine the applied airspace through negotiation, optionally, before step S310, the consumer entity may first send the target of the network management intent to the producer entity, and the producer entity may determine, based on a capability, whether it is feasible to fulfill the target of the network management intent in the expected applied airspace. If the producer entity confirms that it is feasible, the producer entity may return, to the consumer entity, information indicating that it is confirmed that it is feasible. If the producer entity confirms that it is not feasible, the producer entity may determine a recommended applied airspace, and return the recommended applied airspace to the consumer entity. After receiving the recommended applied airspace, the consumer entity may determine the recommended applied airspace as the applied airspace in step S310, or may adjust the recommended applied airspace as the applied airspace in step S310. For more detailed content about how to determine the applied airspace, refer to the following descriptions in FIG. 5 and FIG. 6. Details are not described herein.

The consumer entity may send the applied airspace to the producer entity in a plurality of manners. For example, the consumer entity may send, to the producer entity, a first request message that carries the applied airspace, where the first request message may be used to request to create the network management intent. For example, the first request message includes the network management intent (the data structure shown in FIG. 1) and the applied airspace, or the first request message includes the network management intent, and the network management intent includes the applied airspace (where for example, the applied airspace may be an expected object in the data structure shown in FIG. 1). For another example, the consumer entity may send, to the producer entity, a second request message that carries the applied airspace, where the second request message is used to modify the network management intent. For example, the second request message may include an identifier of the network management intent and the applied airspace. For still another example, the consumer entity may send, to the producer entity, a third request message that carries the applied airspace, where the third request message is used to activate the network management intent. For example, the third request message may include an identifier of the network management intent and the applied airspace. For still another example, the consumer entity may send, to the producer entity, a fourth request message that carries the applied airspace, where the fourth request message is used to suspend the network management intent. For example, the fourth request message may include an identifier of the network management intent and the applied airspace. It may be understood that the foregoing is merely an example for description. The consumer entity may alternatively send the applied airspace to the producer entity by using separate information or another message. This is not particularly limited in this application.

In a possible implementation, the network management intent is associated with a plurality of applied airspaces. In this case, the network management intent may include a plurality of targets, and the plurality of applied airspaces may be associated with different targets. For example, the network management intent is associated with a first applied airspace and a second applied airspace, the first applied airspace is associated with a target #1 (where for example, communication bandwidth is greater than a first threshold) of the network management intent, and the second applied airspace is associated with a target #2 (where for example, a quantity of users is greater than a second threshold) of the network management intent. Therefore, the consumer entity can be associated with different targets based on features of different airspaces, and the producer entity does not achieve all targets of the network management intent in all applied airspaces without differentiation, to improve performance of the network management intent.

After receiving the applied airspace, the producer entity may consider, by default, an airspace outside the applied airspace as a non-applied airspace. Alternatively, the consumer entity may send a non-applied airspace associated with the network management intent to the producer entity. The target of the network management intent is capable of not being fulfilled in the non-applied airspace. For example, in an uncrewed aerial vehicle application scenario, the non-applied airspace may be an airspace in which an uncrewed aerial vehicle is forbidden to fly, so that the producer entity may not need to configure, in the non-applied airspace, a transmission resource used for uncrewed aerial vehicle communication, to improve transmission resource efficiency.

It may be understood that an expression manner of the non-applied airspace is similar to an expression manner of the applied airspace. For example, the non-applied airspace may be represented by using a longitude range, a latitude range, and a height range, may be represented by using GeoSOT, may be represented by using sphere center coordinates or a sphere radius, or may be represented in another expression manner that can represent an airspace and that is defined in the future. A manner of sending the non-applied airspace may also be similar to a manner of sending the applied airspace. For example, the non-applied airspace may be carried in the first request message, the second request message, the third request message, or the fourth request message described above. Details are not described herein again.

Optionally, the consumer entity may further indicate an applied time period, and the producer entity may configure the managed entity, to enable the target of the network management intent to be fulfilled in the applied airspace and in the applied time period.

The consumer entity may send an applied time period associated with the applied airspace to the producer entity. For example, the consumer entity sends the network management intent to the producer entity, where the network management intent includes the applied airspace (for example, the expected object shown in FIG. 1), and the applied object may include information indicating the applied time period (for example, the expected object context shown in FIG. 1). In this case, the applied time period may be considered as a constraint condition of the applied airspace. The producer entity may determine a managed object based on the applied airspace, and then configure the managed object by using the applied time period as the constraint condition. For another example, the applied time period may alternatively be carried in the first request message, the second request message, the third request message, or the fourth request message described above, or the consumer entity may send the applied time period to the producer entity by using separate information. This is not particularly limited in this application.

S320: The producer entity configures the at least one managed entity of the network management intent based on the applied airspace, to enable the target of the network management intent to be fulfilled when the at least one managed entity provides the service for the terminal device in the applied airspace.

The terminal device in embodiments of this application may be user equipment, an access terminal, a subscriber unit, a subscriber station, a mobile station, a remote station, a remote terminal, a mobile device, a user terminal, a wireless communication device, a user agent, or a user apparatus. For example, the terminal in embodiments of this application may be an uncrewed aerial vehicle, a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, or a terminal in a future evolved network. The wearable device may also be referred to as a wearable intelligent device, and is a general term for wearable devices, such as glasses, gloves, watches, clothes, and shoes, that are developed by intelligently designing daily wear by applying a wearable technology. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and that need to work with other devices such as smartphones, such as various smart bands or smart jewelry for monitoring physical signs. In addition, the terminal device may alternatively be a terminal device in an internet of things (internet of things, IoT) system. An IoT is an important component in development of future information technologies. A main technical feature of the IoT is to connect an object to a network by using a communication technology, to implement an intelligent network of human-machine interconnection and thing-thing interconnection. A specific form of the terminal device is not limited in this application.

It may be understood that there may be a plurality of cases when the terminal device is in the applied airspace. For example, an uncrewed aerial vehicle flies into the applied airspace, or a wearable device is carried into the applied airspace. This is not particularly limited in this application.

The service provided by the managed entity for the terminal device in the applied airspace may be related to the target of the network management intent. For example, the service includes either a communication service or a sensing service. For example, the network management intent is a communication service assurance intent, and the producer entity may configure a managed entity, so that the managed entity provides a communication service for the terminal device in the applied airspace. For example, the producer entity configures a base station, so that the base station provides a transmission resource used for communication for the terminal device (for example, an uncrewed aerial vehicle) in the applied airspace. For another example, the network management intent is a speed test service intent, and the producer entity may configure a base station, so that the base station measures, by using a sensing function, a moving speed of an uncrewed aerial vehicle in the applied airspace. The sensing function may mean that the base station reconstructs and depicts the physical world by using various propagation characteristics, such as reflection, scattering, and refraction, of an electromagnetic wave.

For example, the target of the network management intent may include any one of the following: Communication bandwidth is within a bandwidth indicator range, a communication delay is within a delay indicator range, a quantity of users is within a user indicator range, network-aware speed measurement precision is within a speed measurement precision range, or network-aware positioning precision is within a positioning precision range, where the network-aware speed measurement precision is precision of measuring a speed of a moving object by using a network sensing function, and the network-aware positioning precision is precision of positioning the object by using the network sensing function. If the target of the network management intent includes the target of the communication bandwidth, the communication delay, or the quantity of users, the managed entity may provide the communication service for the terminal device in the applied airspace, to fulfill the corresponding target. If the target of the network management intent includes the target of the network-aware speed measurement precision or the network-aware positioning precision, the managed entity may provide the sensing service for the terminal device in the applied airspace.

That the producer entity configures the at least one managed entity based on the applied airspace may include the following action: The producer entity selects, based on the applied airspace, the at least one managed entity configured to provide the service for the applied airspace.

For example, the producer entity may obtain information about a plurality of managed entities of the network management intent, and select, from the plurality of managed entities based on the applied airspace and the information about the plurality of managed entities, the at least one managed entity configured to provide the service for the applied airspace. The information about the managed entities obtained by the producer entity may be related to the target of the network management intent. For example, the information about the managed entities may include at least one of the following: location information, frequency information, beam direction information, or beam width information. For example, the producer entity may select, based on the information about the managed entities, at least one managed entity whose service scope covers the applied area. For example, the location information includes height information of the managed entity. The producer entity obtains height information of the plurality of managed entities, determines a height difference between each managed object and the applied airspace, and selects a managed object whose height difference is less than or equal to a specific height difference threshold to provide the service for the terminal device in the applied airspace. For another example, the producer entity may select, based on a frequency, a beam direction, or a beam width supported by the acted management entity, a managed entity that can provide a broadband of the target of the network management intent. This is not particularly limited in this application.

It may be understood that, selecting, by the producer entity, the at least one managed entity configured to provide the service for the applied airspace is an optional action. In other words, the producer entity may directly configure the managed entity, to enable the target of the network management intent to be fulfilled when the managed entity provides the service for the terminal device in the applied airspace. That the producer entity configures the managed entity may be that the producer entity sends an instruction of a management action group to the managed entity, and the managed entity provides a service for the terminal device by executing the management action group.

The producer entity may determine, based on the applied airspace, a network management action group used to fulfill the target of the network management intent. For example, the producer entity configures the frequency of the managed entity based on the target of the network management intent and a height of the applied airspace. For example, when the height of the applied airspace is less than or equal to 200 meters, the frequency of the managed entity serving the terminal device in the applied airspace is configured as 2.6 G. When the height of the applied airspace is greater than or equal to 200 meters, the frequency of the managed entity serving the terminal device in the applied airspace is configured as 4.9 F. When the height of the applied airspace is greater than or equal to 150 meters and less than or equal to 200 meters, the frequency of the managed entity may alternatively be configured as 4.9 G as handover bandwidth. For another example, the producer entity may further configure a beam direction and a beam width of the managed entity based on a height of the applied airspace, so that the managed entity can provide the service for the applied airspace.

After sending, to the managed entity, the network management action group used to enable the target of the network management intent to be fulfilled, the producer entity may further obtain a performance indicator value related to the target of the network management intent. For example, the target of the network management intent is that the communication delay is within the delay indicator range, and the producer entity may obtain a communication delay of the terminal device in the applied airspace, to determine whether the target of the network management intent is fulfilled. In this case, the producer entity may further feed back an execution status of the network management intent to the consumer entity, that is, the producer entity may further perform the following step S330.

Optionally, in S330, the producer entity sends intent report information to the consumer entity. Correspondingly, the consumer entity receives the intent report information sent by the producer entity.

The intent report information may indicate whether the target of the network management intent is fulfilled when the at least one managed entity provides the service for the terminal device in the applied airspace. For example, the producer entity may determine, based on the performance indicator value of the managed entity, whether the target of the network management intent is fulfilled, and feed back a result of fulfilling the target of the network management intent to the consumer entity. Optionally, the producer entity may further feed back a current performance indicator value to the consumer entity, for example, feed back a communication delay of a terminal device in a current applied airspace. In this way, the consumer entity can learn of the execution status of the network management intent in time.

Optionally, if the target of the network management intent is not fulfilled, the producer entity may further determine, in the applied area, an area in which the target of the network management intent is not fulfilled, and include, in the intent report information, an unfulfilled area in which the target of the network management intent is not fulfilled. For example, the applied area is, for example, an applied area including three three-dimensional spaces shown in FIG. 4. The producer entity determines communication delays when the managed entity provides a communication service for terminal devices in the three-dimensional spaces, and determines that a communication delay in one of the three-dimensional spaces does not fulfill a target of a corresponding network management intent. In this case, the producer entity may feed back coordinates of the three-dimensional space to the consumer entity, so that the consumer entity can learn of an airspace in which the target is not fulfilled, and can perform more refined network management intent management.

Based on this technical solution, the consumer entity can provide the applied airspace associated with the network management intent, so that when the producer entity configures the managed entity, the managed entity can centralize resources to provide the service for the terminal device in the applied airspace. This avoids a case in which the target of the network management intent is not fulfilled due to a problem of inappropriate configuration or excessive resources are used to fulfill the target, so that network management intent configuration is more appropriate.

With reference to FIG. 3 and FIG. 4, the foregoing describes in detail that the consumer entity sends the applied airspace to the producer entity, and the producer entity configures the at least one managed entity based on the applied airspace. Before step S310, to be specific, before the consumer entity sends the applied airspace to the producer entity, the consumer entity may further determine the applied airspace by using a plurality of methods. In a possible implementation, the consumer entity may directly determine the applied airspace based on a scenario. In another possible implementation, the consumer entity and the producer entity may determine the applied airspace through negotiation. For ease of understanding of embodiments of this application, the following describes, with reference to FIG. 5, a possible method for determining, by the consumer entity and the producer entity, the applied airspace through negotiation.

FIG. 5 is a schematic flowchart of a possible method for determining an applied airspace according to an embodiment of this application.

S510: A consumer entity sends a target of a network management intent to a producer entity. Correspondingly, the producer entity receives the target of the network management intent from the consumer entity.

Before determining an area, the consumer entity may send the target of the network management intent to the producer entity, so that the producer entity may determine, based on the target of the network management intent and a capability of a managed entity, the area in which a service can be provided to enable the target of the network management intent to be fulfilled, and feed back the area to the consumer entity.

For example, the consumer entity sends an intent detection request message to the producer entity, where the intent detection request message carries the target of the network management intent. The intent detection request message may be used to request the producer entity to return a recommended applied airspace. Alternatively, the intent detection request message includes detection object indication information, and the detection object indication information indicates the producer entity to return a recommended applied airspace. For example, in an uncrewed aerial vehicle scenario, a description of the detection object indication information may be "recommended feeder airspace", indicating the producer entity to return the recommended applied airspace that can provide a service for the uncrewed aerial vehicle.

S520: The producer entity determines the recommended applied airspace based on the target of the network management intent.

The producer entity may obtain the capability of the managed entity based on the target of the network management intent. For example, the target of the network management intent is that communication bandwidth is greater than or equal to a specific bandwidth threshold. The producer entity may obtain a bandwidth capability of a managed base station, and determine, based on the bandwidth capability, an area in which the target of the network management intent can be fulfilled. For another example, the target of the network management intent is that network-aware positioning precision is greater than or equal to a specific positioning precision threshold. The producer entity may obtain a sensing capability of a managed base station, and determine, based on the sensing capability, an area in which the target of the network management intent can be fulfilled. In other words, the producer entity may estimate, based on the target of the network management intent and the managed capability, a recommended applied area in which the target can be fulfilled.

It may be understood that the producer entity may alternatively determine a recommended non-applied airspace based on the target of the network management intent, and the recommended non-applied airspace may also be used to determine the applied airspace. In this embodiment of this application, the recommended applied airspace is used as an example.

S530: The producer entity sends the recommended applied airspace to the consumer entity. Correspondingly, the consumer entity receives the recommended applied airspace from the producer entity.

For example, the producer entity may send an intent detection response message to the consumer entity, where the intent detection response message includes the recommended applied airspace. An expression form of the recommended applied airspace may be similar to an expression form of the recommended applied airspace described in step S310 in FIG. 3. Details are not described herein again.

S540: The consumer entity determines an applied airspace based on the recommended applied airspace.

The consumer entity may directly consider the recommended applied airspace as the applied airspace, or may adjust the recommended applied airspace based on a scenario to determine the applied airspace, to perform step S310 in FIG. 3 to send the applied airspace to the consumer entity. This is not particularly limited in this application. In this embodiment, the consumer entity determines the applied airspace based on the recommended applied airspace fed back by the producer entity, so that the applied airspace can be more appropriately determined and further, network management intent configuration is more appropriate.

It may be understood that the foregoing optional steps S510 to S540 occur before step S310. In this case, the consumer entity may determine the applied airspace before sending an intent creation request message to the producer entity. In another possible implementation, the consumer entity and the producer entity may exchange an intent creation request message for a plurality of times, and determine the applied airspace through negotiation. For ease of understanding of embodiments of this application, the following describes an example of this possible implementation with reference to FIG. 6.

FIG. 6 is a schematic flowchart of a possible implementation according to an embodiment of this application.

S601: A consumer entity sends an intent creation request message #1 to a producer entity.

The intent creation request message #1 may include a network management intent (for example, the data structure shown in FIG. 1), and the network management intent may include a target of the network management intent and an applied airspace #1 (for example, the expected object in FIG. 1). Alternatively, the intent creation request message includes a network management intent and an applied airspace #1. For more detailed descriptions of the applied airspace #1, refer to the foregoing descriptions of step S310 in FIG. 3. Details are not described herein again.

Optionally, in S602, the producer entity performs a feasibility check based on the applied airspace #1.

The producer entity may determine, based on the target of the network management intent, whether the target of the network management intent can be fulfilled when a managed entity provides a service for a terminal device in the applied airspace #1. If the producer entity determines that the target can be fulfilled, the producer entity may subsequently configure the managed entity based on the applied airspace #1. If the producer entity determines that the target cannot be fulfilled, the producer entity may determine a recommended applied airspace based on the target of the network management intent and the applied airspace #1. In a possible implementation, the producer entity may further invoke a network twin producer entity to estimate whether a current network resource (for example, a communication resource that can be scheduled by the managed entity) can fulfill the target of the network management intent in the applied airspace #1. A manner of determining, by the producer entity, the recommended applied airspace is similar to that in the descriptions of step S520 in FIG. 5. Details are not described herein again.

It may be understood that the producer entity may further perform a feasibility check (feasibility check) on the intent creation request message #1. For example, the producer entity may detect whether the intent creation request message #1 can be successfully interpreted, for example, detect whether the intent creation request message #1 meets syntax and semantics of the network management intent. If it is detected that the intent creation request message #1 can be successfully interpreted, the producer entity may configure a managed object based on the method described above. If it is detected that the intent creation request message #1 cannot be successfully interpreted, for example, a syntax error is detected, the producer entity may send a feedback indicating the syntax error to the consumer entity.

Optionally, in S603, the producer entity sends an intent creation request response message to the consumer entity.

If the producer entity determines, in step S602, that the target of the network management intent can be fulfilled when the managed entity provides the service for the terminal device in the applied airspace #1, the producer entity may include, in the intent creation request response message, information indicating that the applied airspace #1 is feasible. It may be understood that the producer entity may further include, in the intent creation request message #1, an identifier of the network management intent and information about whether the network management intent is successfully created.

If the producer entity determines, in step S602, that the target of the network management intent cannot be fulfilled when the managed entity provides the service for the terminal device in the applied airspace #1, the producer entity may include, in the intent creation request response message, information indicating that the applied airspace #1 is not feasible. For example, the intent creation request response message may include failure cause information, and the failure cause information indicates that the target of the network management intent cannot be fulfilled in the applied airspace #1. It may be understood that, if the network management intent fails to be created due to another cause (for example, an information expression error), the failure cause information may further indicate another cause of the creation failure.

It may be understood that, if the producer entity determines, in step S602, that the target of the network management intent can be fulfilled when the managed entity provides the service for the terminal device in the applied airspace #1, the producer entity may not perform step S603. If the producer entity determines, in step S602, that the target of the network management intent cannot be fulfilled, the intent creation request response message in step S603 may alternatively be replaced with other information, for example, intent feasibility detection feedback information. This is not particularly limited in this application.

If the producer entity further determines the recommended applied airspace, the intent creation request response message may further include the recommended applied airspace. In this case, the consumer entity may further perform the following step S604.

Optionally, in S604, the consumer entity determines an applied airspace #2 based on the recommended applied airspace.

The consumer entity may directly consider the recommended applied airspace as the applied airspace #2, or may adjust the recommended applied airspace based on a scenario to determine the applied airspace #2, and send the applied airspace #2 to the producer entity. For example, the consumer entity may regenerate a data structure of the network management intent based on the applied airspace #2, and send an intent creation request message #2 to the producer entity. The intent creation request message #2 includes the network management intent, and the network management intent includes the applied airspace #2, or the intent creation request message #2 includes the applied airspace #2.

It may be understood that, step S601 to step S604 may loop (loop) N times (where it may be understood that, in the last loop, the intent creation response message in S603 does not include the recommended applied airspace, and step S604 is not performed), until the consumer entity sends an applied airspace #N to the producer entity, and the producer entity determines that the target of the network management intent can be fulfilled when the managed entity provides a service for a terminal device in the applied airspace #N, and configures the managed entity based on the applied airspace #N.

S605: The producer entity configures at least one managed entity of the network management intent based on the applied airspace #N, to enable the target of the network management intent to be fulfilled when the at least one managed entity provides the service for the terminal device in the applied airspace #N.

Content of step S605 is similar to that described in step S320 in FIG. 3. Details are not described herein again.

Optionally, in S606, the producer entity sends intent report information to the consumer entity.

Content of step S606 is similar to that described in step S330 in FIG. 3. Details are not described herein again.

Based on this technical solution, the consumer entity can provide the applied airspace associated with the network management intent, so that when the producer entity configures the managed entity, the managed entity can centralize resources to provide the service for the terminal device in the applied airspace. This avoids a case in which the target of the network management intent is not fulfilled due to a problem of inappropriate configuration, so that network management intent configuration is more appropriate.

It may be further understood that, in the foregoing method embodiments, the method and the operation implemented by the producer entity may alternatively be implemented by a component (for example, a chip or a circuit) in the producer entity. In addition, the method and the operation implemented by the consumer entity may alternatively be implemented by a component (for example, a chip or a circuit) in the consumer entity. This is not limited.

Corresponding to the method provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

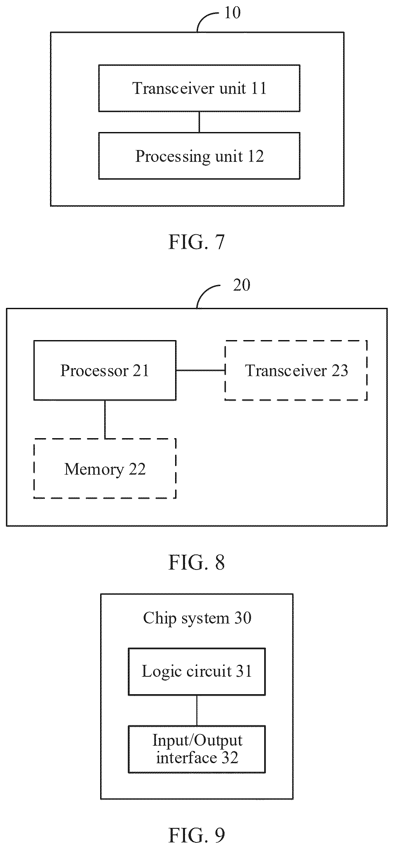

For example, FIG. 7 is a diagram of a communication apparatus 10 according to an embodiment of this application. The apparatus 10 includes a transceiver unit 11 and a processing unit 12. The transceiver unit 11 may be configured to implement a corresponding communication function. The transceiver unit 11 may also be referred to as a communication interface or a communication unit. The processing unit 12 may be configured to perform data or information processing.

Optionally, the apparatus 10 further includes a storage unit. The storage unit may be configured to store instructions and/or data. The processing unit 12 may read the instructions and/or the data in the storage unit, so that the apparatus implements the foregoing method embodiments.

In a possible design, the apparatus 10 may be configured to perform an action performed by the producer entity in the foregoing method embodiments. In this case, the apparatus 10 may be the producer entity or a component in the producer entity. The transceiver unit 11 is configured to perform a receiving and sending-related operation on the producer entity side in the foregoing method embodiments. The processing unit 12 is configured to perform a processing-related operation on the producer entity side in the foregoing method embodiments.

In a first possible implementation, the transceiver unit 11 is configured to receive an applied airspace associated with a network management intent; and the processing unit 12 is configured to configure at least one managed entity of the network management intent based on the applied airspace, to enable a target of the network management intent to be fulfilled when the at least one managed entity provides a service for a terminal device in the applied airspace.

The apparatus 10 may implement the steps or procedures performed by the producer entity in the method embodiments according to embodiments of this application. The apparatus 10 may include units configured to perform the method performed by the producer entity in the method embodiments according to embodiments of this application. A specific process in which the units perform the foregoing corresponding steps is described in detail in the foregoing method embodiments. For brevity, details are not described herein again.

In another possible design, the apparatus 10 may be configured to perform an action performed by the consumer entity in the foregoing method embodiments. In this case, the apparatus 10 may be the consumer entity or a component in the consumer entity. The transceiver unit 11 is configured to perform a receiving and sending-related operation on the consumer entity side in the foregoing method embodiments. The processing unit 12 is configured to perform a processing-related operation on the consumer entity side in the foregoing method embodiments.

In a first possible implementation, the processing unit 12 determines an applied airspace associated with a network management intent, where the applied airspace is used to configure at least one managed entity of the network management intent, to enable a target of the network management intent to be fulfilled when the at least one managed entity provides a service for a terminal device in the applied airspace; and the transceiver unit 11 is configured to send the applied airspace.

The apparatus 10 may implement the steps or procedures performed by the consumer entity in the method embodiments according to embodiments of this application. The apparatus 10 may include units configured to perform the method performed by the consumer entity in the method embodiments according to embodiments of this application. A specific process in which the units perform the foregoing corresponding steps is described in detail in the foregoing method embodiments. For brevity, details are not described herein again.

It may be understood that the apparatus 10 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute at least one software or firmware program and a memory, a combined logic circuit, and/or another suitable component that supports the described functions. In an optional example, a person skilled in the art may understand that the apparatus 10 may be specifically the producer entity in the foregoing embodiments, and may be configured to perform procedures and/or steps corresponding to the producer entity in the foregoing method embodiments; or the apparatus 10 may be specifically the consumer entity in the foregoing embodiments, and may be configured to perform procedures and/or steps corresponding to the consumer entity in the foregoing method embodiments. To avoid repetition, details are not described herein again.

The apparatus 10 in the foregoing solutions has a function of implementing corresponding steps performed by a communication device (for example, the producer entity or the consumer entity) in the foregoing method. The function may be implemented by hardware, or may be implemented by hardware executing corresponding software. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit like the processing unit may be replaced with a processor, respectively performing receiving and sending operations and a related processing operation in the method embodiments.

In addition, the transceiver unit 11 may alternatively be a transceiver circuit (for example, may include a receiver circuit and a transmitter circuit), and the processing unit may be a processing circuit.

It should be noted that the apparatus in FIG. 7 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

For example, FIG. 8 is a diagram of another communication apparatus 20 according to an embodiment of this application. The apparatus 20 includes a processor 21, and the processor 21 is coupled to a memory 22. Optionally, the apparatus 20 further includes the memory 22. The memory 22 is configured to store a computer program or instructions and/or data. The processor 21 is configured to execute the computer program or the instructions stored in the memory 22, or read the data stored in the memory 22, to perform the method in the foregoing method embodiments.

Optionally, there is at least one processor 21.

Optionally, there is at least one memory 22.

Optionally, the memory 22 and the processor 21 are integrated together or disposed separately.

Optionally, as shown in FIG. 8, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the producer entity in the foregoing method embodiments.

For example, the processor 21 is configured to execute the computer program or the instructions stored in the memory 22, to implement related operations of the producer entity in the foregoing method embodiments, for example, the method performed by the producer entity in the embodiment shown in FIG. 3.

In another solution, the apparatus 20 is configured to implement operations performed by the consumer entity in the foregoing method embodiments.

For example, the processor 21 is configured to execute the computer program or the instructions stored in the memory 22, to implement related operations of the consumer entity in the foregoing method embodiments, for example, the method performed by the consumer entity in the embodiment shown in FIG. 3.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

When the processor is a general-purpose processor, a DSP, an ASIC, an FPGA or another programmable logic device, a discrete gate or a transistor logic device, or a discrete hardware component, the memory (storage module) may be integrated into the processor.

The memory described in this specification aims to include but is not limited to these memories and any memory of another appropriate type.

For example, FIG. 9 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

Specifically, for example, if the chip system 30 is installed in the producer entity, the logic circuit 31 is coupled to the input/output interface 32, and the input/output interface 32 may input a wake-up signal to the logic circuit 31 for processing.

In a solution, the chip system 30 is configured to implement operations performed by the producer entity in the foregoing method embodiments.

For example, the logic circuit 31 is configured to implement a processing-related operation performed by the producer entity in the foregoing method embodiments, for example, a processing-related operation performed by the producer entity in the embodiment shown in FIG. 3. The input/output interface 32 is configured to implement a sending and/or receiving-related operation performed by the producer entity in the foregoing method embodiments, for example, a sending and/or receiving-related operation performed by the producer entity in the embodiment shown in FIG. 3.

In another solution, the chip system 30 is configured to implement operations performed by the consumer entity in the foregoing method embodiments.

For example, the logic circuit 31 is configured to implement a processing-related operation performed by the consumer entity in the foregoing method embodiments, for example, a processing-related operation performed by the consumer entity in the embodiment shown in FIG. 3. The input/output interface 32 is configured to implement a sending and/or receiving-related operation performed by the consumer entity in the foregoing method embodiments, for example, a sending and/or receiving-related operation performed by the consumer entity in the embodiment shown in FIG. 3.

An embodiment of this application further provides a computer-readable storage medium. The computer-readable storage medium stores computer instructions used to implement the method performed by the device in the foregoing method embodiments.

For example, when a computer program is executed by a computer, the computer is enabled to implement the method performed by the producer entity in the foregoing method embodiments.

For another example, when the computer program is executed by a computer, the computer is enabled to implement the method performed by the consumer entity in the foregoing method embodiments.

An embodiment of this application further provides a computer program product, including instructions. When the instructions are executed by a computer, the method performed by the producer entity or the consumer entity in the foregoing method embodiments is implemented.

An embodiment of this application further provides a communication system. The communication system includes the producer entity and the consumer entity in the foregoing embodiments.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, at least two units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes at least one computer instruction. When the computer program instructions are loaded and executed on the computer, the procedures or the functions in embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating at least one usable medium. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network management intent configuration method, wherein the method comprises:
receiving an applied airspace associated with a network management intent; and
configuring at least one managed entity of the network management intent based on the applied airspace, to enable a target of the network management intent to be fulfilled when the at least one managed entity provides a service for a terminal device in the applied airspace.

2. The method according to claim 1, wherein the applied airspace is represented by using a longitude range, a latitude range, and a height range, or the applied airspace is represented through three-dimensional network coding, or the applied airspace is represented by using sphere center coordinates and a sphere radius, or the applied airspace is represented by using sector center coordinates, a vertical angle range, a horizontal angle range, and a sector side length.

3. The method according to claim 1 or 2, wherein the target of the network management intent comprises at least one of the following: communication bandwidth is within a bandwidth indicator range, a communication delay is within a delay indicator range, a quantity of communication users is within a user indicator range, network-aware speed measurement precision is within a speed measurement precision range, or network-aware positioning precision is within a positioning precision range, wherein the network-aware speed measurement precision is precision of measuring a speed of a moving object by using a network sensing function, and the network-aware positioning precision is precision of positioning the object by using the network sensing function.

4. The method according to any one of claims 1 to 3, wherein configuring the at least one managed entity of the network management intent based on the applied airspace, to enable the target of the network management intent to be fulfilled when the at least one managed entity provides the service for the terminal device in the applied airspace comprises:
configuring the at least one managed entity of the network management intent based on the applied airspace, to enable the target of the network management intent to be fulfilled when the at least one managed entity provides the service for the terminal device in the applied airspace in an applied time period, wherein the applied airspace comprises information about the applied time period.

5. The method according to any one of claims 1 to 4, wherein the method further comprises:
receiving a non-applied airspace associated with the network management intent, wherein the at least one managed entity is capable of not providing a service for a terminal device in the non-applied airspace.

6. The method according to any one of claims 1 to 5, wherein receiving the applied airspace associated with the network management intent comprises:
receiving a first request message, wherein the first request message is used to request to create the network management intent, and the first request message comprises the network management intent and the applied airspace, or the first request message comprises the network management intent, and the network management intent comprises the applied airspace;
receiving a second request message, wherein the second request message is used to request to modify the network management intent, and the second request message comprises an identifier of the network management intent and the applied airspace;
receiving a third request message, wherein the third request message is used to request to activate the network management intent, and the third request message comprises an identifier of the network management intent and the applied airspace; or
receiving a fourth request message, wherein the fourth request message is used to request to suspend the network management intent, and the fourth request message comprises an identifier of the network management intent and the applied airspace.

7. The method according to any one of claims 1 to 6, wherein configuring the at least one managed entity of the network management intent based on the applied airspace, to enable the target of the network management intent to be fulfilled when the at least one managed entity provides the service for the terminal device in the applied airspace comprises:
obtaining information about a plurality of managed entities of the network management intent;
determining the at least one managed entity in the plurality of managed entities based on the applied airspace and the information about the plurality of managed entities; and
configuring the at least one managed entity, to enable the target of the network management intent to be fulfilled when the at least one managed entity provides the service for the terminal device in the applied airspace.

8. The method according to claim 7, wherein the information about the managed entities comprises at least one of the following: location information, frequency information, beam direction information, or beam width information.

9. The method according to any one of claims 1 to 8, wherein the service comprises either a communication service or a sensing service.

10. The method according to any one of claims 1 to 9, wherein before receiving the applied airspace associated with the network management intent, the method further comprises:
receiving the target of the network management intent;
determining a recommended applied airspace based on the target of the network management intent; and
sending the recommended applied airspace, wherein the recommended applied airspace is used to determine the applied airspace.

11. The method according to any one of claims 1 to 10, wherein the method further comprises:
sending intent report information, wherein the intent report information indicates whether the target of the network management intent is fulfilled when the at least one managed entity provides the service for the terminal device in the applied airspace.

12. A network management intent configuration method, wherein the method comprises:
determining an applied airspace associated with a network management intent, wherein the applied airspace is used to configure at least one managed entity of the network management intent, to enable a target of the network management intent to be fulfilled when the at least one managed entity provides a service for a terminal device in the applied airspace; and
sending the applied airspace.

13. The method according to claim 12, wherein the applied airspace is represented by using a longitude range, a latitude range, and a height range, or the applied airspace is represented through three-dimensional network coding, or the applied airspace is represented by using sphere center coordinates and a sphere radius, or the applied airspace is represented by using sector center coordinates, a vertical angle range, a horizontal angle range, and a sector side length.

14. The method according to claim 12 or 13, wherein the target of the network management intent comprises at least one of the following: communication bandwidth is within a bandwidth indicator range, a communication delay is within a delay indicator range, a quantity of communication users is within a user indicator range, network-aware speed measurement precision is within a speed measurement precision range, or network-aware positioning precision is within a positioning precision range, wherein the network-aware speed measurement precision is precision of measuring a speed of a moving object by using a network sensing function, and the network-aware positioning precision is precision of positioning the object by using the network sensing function.

15. The method according to any one of claims 12 to 14, wherein the applied airspace comprises information indicating an applied time period associated with the applied airspace, and the applied time period is used to configure at least one managed entity of the network management intent, to enable the target of the network management intent to be fulfilled when the at least one managed entity provides the service for the terminal device in the applied airspace in the applied time period.

16. The method according to any one of claims 12 to 15, wherein the method further comprises:
sending a non-applied airspace associated with the network management intent, wherein the at least one managed entity is capable of not providing a service for a terminal device in the non-applied airspace.

17. The method according to any one of claims 12 to 16, wherein sending the applied airspace comprises:
sending a first request message, wherein the first request message is used to request to create the network management intent, and the first request message comprises the network management intent and the applied airspace, or the first request message comprises the network management intent, and the network management intent comprises the applied airspace;
sending a second request message, wherein the second request message is used to request to modify the network management intent, and the second request message comprises an identifier of the network management intent and the applied airspace;
sending a third request message, wherein the third request message is used to request to activate the network management intent, and the third request message comprises an identifier of the network management intent and the applied airspace; or
sending a fourth request message, wherein the fourth request message is used to request to suspend the network management intent, and the fourth request message comprises an identifier of the network management intent and the applied airspace.

18. The method according to any one of claims 12 to 17, wherein the method comprises:
sending the target of the network management intent; and
receiving a recommended applied airspace, wherein the recommended applied airspace is determined based on the target of the network management intent, and the recommended applied airspace is used to determine the applied airspace.

19. The method according to any one of claims 12 to 18, wherein the service comprises either a communication service or a sensing service.

20. The method according to any one of claims 12 to 19, wherein the method comprises:
receiving intent report information, wherein the intent report information indicates whether the target of the network management intent is fulfilled when the at least one managed entity provides the service for the terminal device in the applied airspace.

21. A network management intent configuration method, wherein the method comprises:
sending an applied airspace associated with a network management intent;
receiving the applied airspace; and
configuring at least one managed entity of the network management intent based on the applied airspace, to enable a target of the network management intent to be fulfilled when the at least one managed entity provides a service for a terminal device in the applied airspace.

22. A network management intent configuration apparatus, wherein the apparatus comprises a transceiver unit and a processing unit, wherein
the transceiver unit is configured to receive an applied airspace associated with a network management intent; and
the processing unit is configured to configure at least one managed entity of the network management intent based on the applied airspace, to enable a target of the network management intent to be fulfilled when the at least one managed entity provides a service for a terminal device in the applied airspace.

23. A network management intent configuration apparatus, wherein the apparatus comprises a transceiver unit and a processing unit, wherein
the processing unit is configured to determine an applied airspace associated with a network management intent, wherein the applied airspace is used to configure at least one managed entity of the network management intent, to enable a target of the network management intent to be fulfilled when the at least one managed entity provides a service for a terminal device in the applied airspace; and
the transceiver unit is configured to send the applied airspace.

24. A communication apparatus, comprising a unit configured to perform the method according to any one of claims 1 to 11, or comprising a unit configured to perform the method according to any one of claims 12 to 20.

25. A communication system, comprising an apparatus configured to perform the method according to any one of claims 1 to 11 and an apparatus configured to perform the method according to any one of claims 12 to 20.

26. The system according to claim 25, further comprising a managed entity of a network management intent.

27. A computer-readable storage medium, wherein the computer-readable storage medium stores a computer program, and when the computer program runs on a computer, the computer is enabled to perform the method according to any one of claims 1 to 11, or the computer is enabled to perform the method according to any one of claims 12 to 20.

28. A computer program product, comprising computer program code, wherein when the computer program code is run on a computer, the computer is enabled to implement the method according to any one of claims 1 to 11, or the computer is enabled to implement the method according to any one of claims 12 to 20.

29. A communication apparatus, comprising: a processor, configured to execute a computer program stored in a memory, to enable the apparatus to perform the method according to any one of claims 1 to 11, or configured to execute a computer program stored in a memory, to enable the apparatus to perform the method according to any one of claims 12 to 20.

30. The apparatus according to claim 29, wherein the apparatus further comprises the memory.
